# EUROPEAN PATENT SPECIFICATION

(11) **EP 2 789 493 B1**
(45) Date of publication and mention of the grant of the patent: **27.09.2017**
(21) Application number: 11876861.3
(22) Date of filing: 09.12.2011
(51) Int. Cl.: B60L 3/00, B60K 11/06, B60L 11/18, B60K 28/12, H01G 2/08, B60K 1/00, H01M 10/625, H01M 10/6563, H01M 10/66, H01M 10/613

(54) **APPARATUS FOR COOLING ELECTRIC STORAGE APPARATUS, AND METHOD FOR CONTROLLING COOLING OF ELECTRIC STORAGE APPARATUS**
VORRICHTUNG ZUM KÜHLEN EINER ELEKTRISCHEN SPEICHERVORRICHTUNG UND VERFAHREN ZUR STEUERUNG DER KÜHLUNG EINER ELEKTRISCHEN SPEICHERVORRICHTUNG
APPAREIL POUR REFROIDIR UN APPAREIL DE STOCKAGE D'ÉLECTRICITÉ ET PROCÉDÉ POUR COMMANDER LE REFROIDISSEMENT D'UN APPAREIL DE STOCKAGE D'ÉLECTRICITÉ

(43) Date of publication of application: 15.10.2014
(73) Proprietor: Toyota Jidosha Kabushiki Kaisha, Toyota-shi, Aichi 471-8571 (JP)
(72) Inventor: KIKUCHI, Yoshiaki, Toyota-shi Aichi 471-8571 (JP)
(74) Representative: Intès, Didier Gérard André
(86) International application number: PCT/JP2011/078549
(87) International publication number: WO 2013/084350

(56) References cited:
- JP-A- 2000 135 919
- JP-A- 2005 168 283
- JP-A- 2007 331 737
- JP-A- 2008 041 860
- JP-A- 2010 179 878
- JP-A- 2010 179 878
- JP-A- 2010 215 037
- US-A1- 2008 296 075
- US-A1- 2011 042 058

## Description

### TECHNICAL FIELD

The present invention relates to a cooling device for a power storage device mounted on a vehicle and a cooling control method for the power storage device.

### BACKGROUND ART

Hybrid vehicles, fuel cell electric vehicles, and electric vehicles running by driving force from motors are conventionally known. Batteries and capacitors are mounted on such vehicles for storing electricity to be supplied to the motors. The batteries and capacitors generate heat when charging and discharging electricity. The batteries and capacitors therefore need to be cooled.

Japanese Patent Laying-Open No. 2011-159633 (Patent Document 1) discloses a battery unit for use in hybrid railway vehicles. In this battery unit, an electrode unit is arranged in a sealed space.

This battery unit can prevent adhesion to the electrode unit of dust included in the cooling air taken into the battery unit from the outside. As a result, electrical malfunctions can be prevented (see Patent Document 1).

### CITATION LIST

### PATENT DOCUMENT

PTD 1: Japanese Patent Laying-Open No. 2011-159633

### SUMMARY OF INVENTION

### TECHNICAL PROBLEM

The battery unit for use in hybrid railway vehicles is generally mounted under the floor of the vehicle body and thus takes in the air including much dust.

On the other hand, a battery unit for hybrid vehicles, fuel cell electric vehicles, and electric vehicles takes in the air from the vehicle interior, which is clean compared with the outside of the vehicle, and the air for cooling the battery unit therefore includes less dust.

However, the air intake port for introducing the air in the vehicle interior into the battery unit is often provided on the side or under the rear seat (at the foot of the passenger). When the passenger opens the door to get on and off the vehicle, dust flowing into the vehicle interior from the outside or dust adhering to the passenger may be sucked into the battery unit from the air intake port.

An object of the present invention is therefore to suppress feeding of cooling air including dust into a power storage device in a cooling device for cooling the power storage device with the air sucked from the vehicle interior.

Another object of the present invention is to suppress feeding of cooling air including dust to a power storage device in a cooling control method for cooling the power storage device with the air sucked from the vehicle interior.

### SOLUTION TO PROBLEM

According to the present invention, a cooling device for a power storage device mounted on a vehicle according to claim 1 is provided.

Preferably, the air blower includes an intake port. The intake port introduces air in the vehicle interior. The control device controls the air blower such that air volume to the power storage device is suppressed more when a door located closest to the intake port is open than when all the doors are closed.

Preferably, the vehicle includes a door detector. The door detector detects whether at least one of the doors is open. The control device prohibits suppression of the air volume by the air blower when the door detector is abnormal or when a signal received from the door detector is abnormal.

Preferably, the vehicle includes a door detector. The door detector detects whether at least one of the doors is open. The control device prohibits suppression of the air volume by the air blower when the vehicle is running and a signal received from the door detector indicates that at least one of the doors is open.

Preferably, the vehicle includes a state monitor. The state monitor monitors a state of the power storage device. The control device prohibits suppression of the air volume by the air blower, based on a signal from the state monitor.

Further preferably, the control device prohibits suppression of the air volume by the air blower when the state monitor determines that the power storage device is abnormal.

Preferably, the vehicle includes a temperature detector. The temperature detector detects a temperature of the power storage device. The control device controls the air volume by the air blower, based on the temperature detected by the temperature detector, when suppression of air volume to the power storage device is stopped.

Preferably, the air blower includes a plurality of fans. The control device suppresses blowing from all of the plurality of fans when blowing from any one of the plurality of fans is suppressed.

A cooling control method for a power storage device mounted on a vehicle according to claim 9 is also provided.

Preferably, the air blower includes an intake port for introducing air in the vehicle interior. The step of controlling includes controlling the air blower such that air volume to the power storage device is suppressed more when a door located closest to the intake port is open than when the all doors are closed.

Preferably, the air blower includes a plurality of fans. The step of controlling includes suppressing blowing from all of the plurality of fans when blowing from any one of the plurality of fans is suppressed.

### ADVANTAGEOUS EFFECTS OF INVENTION

In the present invention, the control device controls the air blower such that air volume to the power storage device is suppressed more when at least one of the doors of the vehicle is open than when all the doors of the vehicle are closed. Accordingly, air volume supplied from the vehicle interior to the power storage device is suppressed when dust enters the vehicle interior from the outside due to opening of the door. The present invention therefore can suppress feeding of the cooling air including dust to the power storage device, in the cooling device for cooling the power storage device with air sucked from the vehicle interior.

### BRIEF DESCRIPTION OF DRAWINGS

Fig. 1 is an overall configuration diagram of a vehicle provided with a battery cooling device according to a first embodiment of the present invention.
Fig. 2 is a diagram showing an exemplary arrangement of intake ports shown in Fig. 1 in the vehicle interior.
Fig. 3 is a functional block diagram in connection with battery cooling control of a control device shown in Fig. 1.
Fig. 4 is a time chart showing the rotation speed of a cooling fan when a vehicle door is opened and closed.
Fig. 5 is a flowchart illustrating a control structure of a program for battery cooling control performed by the control device in the battery cooling device according to the first embodiment of the present invention.
Fig. 6 is a flowchart of a fan rotation speed suppression determination process performed in step S40 in the flowchart shown in Fig. 5.
Fig. 7 is a flowchart of a fan rotation speed decision process performed in step S50 in the flowchart shown in Fig. 5.
Fig. 8 is a time chart showing the rotation speed of a cooling fan when a vehicle door is opened and closed according to a modification to the first embodiment.
Fig. 9 is a configuration diagram of cooling fans in the battery cooling device according to a second embodiment of the present invention.

### DESCRIPTION OF EMBODIMENTS

Embodiments of the present invention will now be described below in details with reference to the figures. In the figures, the same or corresponding parts are denoted with the same reference signs, and a description thereof will not be repeated.

### [First Embodiment]

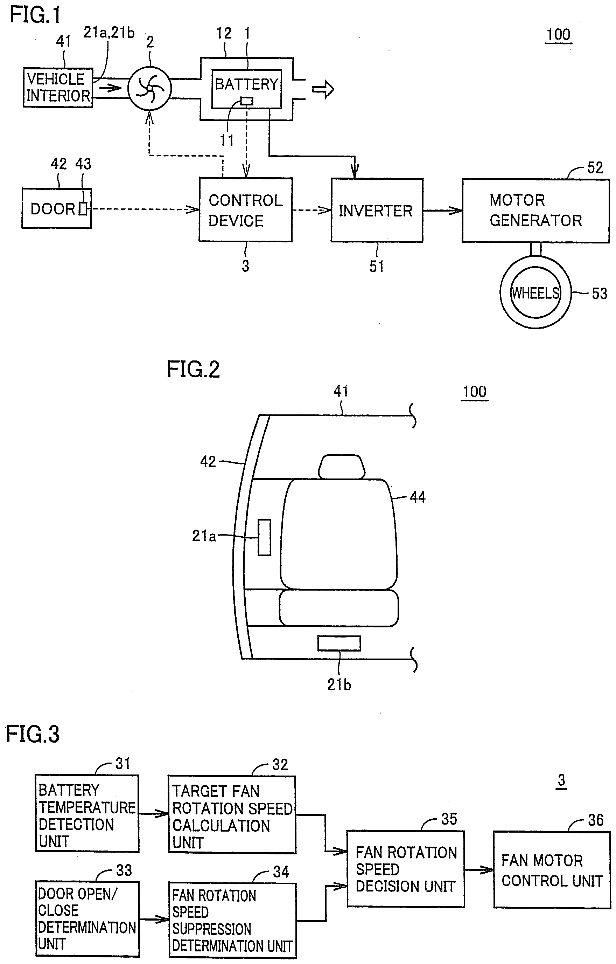

Fig. 1 is an overall configuration diagram of a vehicle provided with a battery cooling device according to a first embodiment of the present invention. Referring to Fig. 1, a vehicle 100 includes a battery 1, a battery state monitor 11, a battery pack 12, a cooling fan 2, a control device 3, an inverter 51, a motor generator 52, and wheels 53.

Battery 1 is a rechargeable DC (Direct Current) power source, for example, a nickel metal hydride, lithium ion, or other secondary batteries. Battery 1 supplies DC power to inverter 51. Battery 1 is charged with electricity generated by motor generator 52 during regenerative braking of vehicle 100.

Battery state monitor 11 detects a state of battery 1 and outputs the detected state to control device 3. The state of battery 1 refers to, for example, battery temperature, SOC (State Of Charge), voltage, and current. Battery state monitor 11 has a battery temperature sensor for detecting the temperature of battery 1. For example, a thermistor can be used as the battery temperature sensor. Battery state monitor 11 also determines whether the state of battery 1 is abnormal, based on the temperature of battery 1. The state of battery 1 is abnormal, for example, when the temperature of battery 1 exceeds an upper limit temperature.

Battery pack 12 accommodates battery 1 inside to protect battery 1 from the surroundings. Battery pack 12 is in communication with vehicle interior 41 through intake ports 21a, 21b open in vehicle interior 41. Cooling fan 2 is provided on the way of the air flow path from intake ports 21a, 21b to battery pack 12. Cooling fan 2 may be provided on the way of the air flow path from battery pack 12 to the exhaust port. The exhaust port is provided to exhaust the cooling air to the outside of battery pack 12. Cooling fan 2 may be provided inside battery pack 12. Cooling fan 2 sucks the air in vehicle interior 41 of vehicle 100 from intake ports 21a, 21b and blows the cooling air into battery pack 12, based on a control signal from control device 3. Battery 1 is thereby cooled by the cooling air from cooling fan 2 through heat exchange fins formed on the surface of battery 1.

Fig. 2 is a diagram showing an exemplary arrangement of the intake ports shown in Fig. 1 in the vehicle interior. Referring to Fig. 2, intake port 21a is provided on the side of a rear seat 44 that is close to a door 42. Intake port 21b is provided under rear seat 44 (at the foot of the passenger). Door 42 is the one located closest to intake ports 21a, 21b of all of the doors of vehicle 100.

Referring to Fig. 1 again, door 42 is provided with a door switch 43. Door switch 43 detects whether door 42 is open, and outputs the detection result to control device 3. Door switch 43 is, for example, a door courtesy switch.

Inverter 51 converts DC voltage received from battery 1 into three-phase AC (Alternating Current) voltage, based on a control signal from control device 3, and outputs the converted three-phase AC voltage to motor generator 52. During regenerative braking of vehicle 100, inverter 51 converts three-phase AC voltage generated by motor generator 52 into DC voltage based on a control signal from control device 3 and outputs the converted DC voltage to battery 1. A boost converter for boosting voltage input from battery 1 may be included between battery 1 and inverter 51.

Motor generator 52 is an AC motor, for example, a three-phase AC synchronous motor. Motor generator 52 generates driving torque for vehicle 100 with three-phase AC voltage received from inverter 51. The driving torque of motor generator 52 is sent to wheels 53 to run vehicle 100.

During regenerative braking of vehicle 100, motor generator 52 is driven by wheels 53 so that motor generator 52 is operated as a generator. Motor generator 52 thereby acts as a regenerative brake for converting braking energy into electricity. The electricity generated by motor generator 52 is stored in battery 1 through inverter 51.

Control device 3 generates a control signal for driving inverter 51 such that vehicle 100 attains a desired driving state, and outputs the generated control signal to inverter 51. Control device 3 also generates a control signal for driving cooling fan 2 and outputs the generated control signal to cooling fan 2.

Fig. 3 is a functional block diagram in connection with cooling control for battery 1 of control device 3 shown in Fig. 1. Referring to Fig. 3, control device 3 includes a battery temperature detection unit 31, a target fan rotation speed calculation unit 32, a door open/close determination unit 33, a fan rotation speed suppression determination unit 34, a fan rotation speed decision unit 35, and a fan motor control unit 36.

Battery temperature detection unit 31 detects the temperature of battery 1 based on a signal from battery state monitor 11.

Target fan rotation speed calculation unit 32 calculates a target rotation speed of cooling fan 2 based on the temperature of battery 1 detected by battery temperature detection unit 31. Target fan rotation speed calculation unit 32 may determine whether to operate cooling fan 2, based on the temperature of battery 1.

Door open/close determination unit 33 determines whether door 42 is opened, based on a signal from door switch 43. Door open/close determination unit 33 determines that the signal from door switch 43 is abnormal when it fails to receive the signal from door switch 43 normally due to signal disconnection, short-circuiting, communication error, or other reasons. Door open/close determination unit 33 determines that door switch 43 is abnormal also when vehicle 100 is running and the signal received from door switch 43 indicates that door 42 is open. Door open/close determination unit 33 may determine whether door 42 is open only when vehicle 100 is stopped.

Fan rotation speed suppression determination unit 34 determines whether to suppress the rotation speed of cooling fan 2 and whether to restore the rotation speed of cooling fan 2, based on the determination result of door open/close determination unit 33. Specifically, fan rotation speed suppression determination unit 34 makes a determination to suppress the rotation speed of cooling fan 2, when door 42 is open. Fan rotation speed suppression determination unit 34 makes a determination to start restoring the rotation speed of cooling fan 2 after a predetermined time has passed since door 42 is closed. Here, a predetermined time refers to an estimated time during which presumably much of the dust entering vehicle interior 41 while door 42 is open drops onto the floor or seats in vehicle interior 41 after door 42 is closed. Accordingly, the operation of restoring the air volume to battery 1 is started after the amount of dust floating in the air in vehicle interior 41 decreases, thereby suppressing feeding of the cooling air including dust to battery 1. Fan rotation speed suppression determination unit 34 makes a determination to terminate the restoration of rotation speed of cooling fan 2 when a predetermined condition is satisfied. A predetermined condition is, for example, that the actual rotation speed of cooling fan 2 agrees with the target rotation speed calculated by target fan rotation speed calculation unit 32.

Fan rotation speed decision unit 35 suppresses the target rotation speed of cooling fan 2 based on the determination result of fan rotation speed suppression determination unit 34. Specifically, when the rotation speed of cooling fan 2 is to be suppressed, fan rotation speed decision unit 35 reduces the target rotation speed to a predetermined rotation speed. Here, fan rotation speed decision unit 35 may stop operation of cooling fan 2. The air volume to battery 1 thereby can be suppressed.

On the other hand, when the rotation speed of cooling fan 2 is to be restored, fan rotation speed decision unit 35 increases the target rotation speed to a required rotation speed. The required rotation speed refers to, for example, the target rotation speed calculated by target fan rotation speed calculation unit 32. Here, fan rotation speed decision unit 35 may start operation of cooling fan 2. The air volume to battery 1 thereby can be restored. Here, the rate of increasing the target rotation speed to restore the rotation speed of cooling fan 2 is set lower than the rate of reducing the target rotation speed to suppress the rotation speed of cooling fan 2. Accordingly, noise and vibration produced when the rotation speed of cooling fan 2 is rapidly increased can be suppressed.

Fan rotation speed decision unit 35 prohibits suppression of rotation speed of cooling fan 2 when door switch 43 is abnormal or when the signal from door switch 43 is abnormal. Fan rotation speed decision unit 35 prohibits suppression of rotation speed of cooling fan 2 also when notified by battery state monitor 11 that battery 1 is abnormal. Fan rotation speed decision unit 35 may prohibit suppression of rotation speed of cooling fan 2 when vehicle 100 is running and the signal received from door switch 43 indicates that door 42 is open.

Fan rotation speed decision unit 35 sets the calculation result from target fan rotation speed calculation unit 32 as the target rotation speed when the rotation speed of cooling fan 2 is not to be suppressed and not to be restored. That is, when suppression of the air volume to battery 1 is stopped, fan rotation speed decision unit 35 controls the air volume to battery 1 based on the temperature detected by battery temperature detection unit 31. In other words, control device 3 controls the air volume of cooling fan 2 based on the temperature of battery 1, in a state in which door 42 is closed. When door 42 is opened, control device 3 proceeds to control based on the open/closed state of door 42.

Fan motor control unit 36 generates a control signal for driving cooling fan 2 such that the rotation speed of cooling fan 2 agrees with the target rotation speed decided by fan rotation speed decision unit 35, and outputs the generated control signal to cooling fan 2.

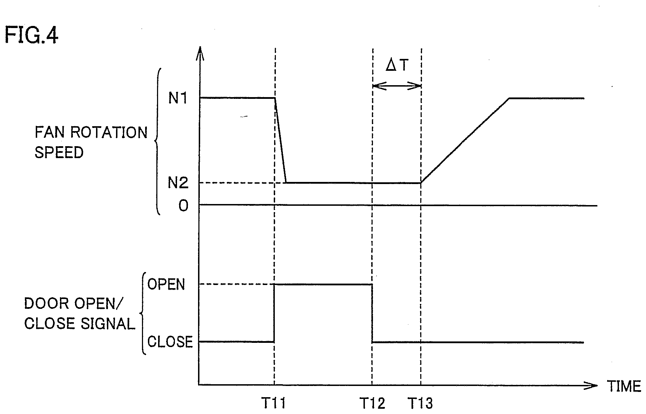

Fig. 4 is a time chart showing the rotation speed of cooling fan 2 when door 42 of vehicle 100 is opened and closed. In Fig. 4, the horizontal axis shows the time, and vertical axis shows the fan rotation speed and the door open/close signal.

Referring to Fig. 4, at time T11, when the closed door 42 is opened, door switch 43 outputs to control device 3 a signal indicating that door 42 is open. Control device 3 reduces the rotation speed of cooling fan 2 from N1 to N2 based on the signal from door switch 43.

At time T12, when door 42 is closed, door switch 43 outputs to control device 3 a signal indicating that door 42 is closed. Control device 3 starts counting the time with the rotation speed of cooling fan 2 kept reduced.

At time T13, when a predetermined time ΔT has passed since T12, control device 3 starts restoring the rotation speed of cooling fan 2. Here, the predetermined time ΔT is an estimated time during which presumably much of dust entering vehicle interior 41 while door 42 is open drops onto the floor and seats in vehicle interior 41 after door 42 is closed. Accordingly, the operation of restoring the air volume to battery 1 is started after the amount of dust floating in the air in vehicle interior 41 decreases, thereby suppressing feeding of the cooling air including dust to battery 1.

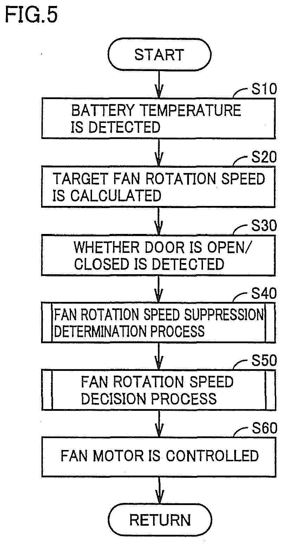

Fig. 5 is a flowchart illustrating the battery cooling control performed in control device 3 in Fig. 1. The process routine in this flowchart from the main routine is executed every certain time or every time a predetermined condition is satisfied.

Referring to Fig. 5, upon start of the process, first, in step (step hereinafter referred to as S) 10, control device 3 takes in a signal from battery state monitor 11 and detects the temperature of battery 1.

In S20, control device 3 calculates the target rotation speed of cooling fan 2 based on the temperature of battery 1. Control device 3 may determine whether to operate cooling fan 2, based on the temperature of battery 1.

In S30, control device 3 takes in a signal from door switch 43 and detects whether door 42 is open. Control device 3 determines that the signal from door switch 43 is abnormal when it fails to receive the signal from door switch 43 normally due to signal line disconnection, short-circuiting, communication error, or other reasons. Control device 3 determines that door switch 43 is abnormal when vehicle 100 is running and the signal received from door switch 43 indicates that door 42 is open. Control device 3 may determine whether door 42 is open only when vehicle 100 is stopped. This can prevent malfunction when door switch 43 is failed.

In S40, control device 3 determines whether to suppress the rotation speed of cooling fan 2 and whether to restore the rotation speed of cooling fan 2.

In S50, control device 3 decides the target rotation speed of cooling fan 2.

In S60, control device 3 generates a control signal for driving cooling fan 2 such that the rotation speed of cooling fan 2 agrees with the target rotation speed, and outputs the generated control signal to cooling fan 2. The process then returns to the main routine.

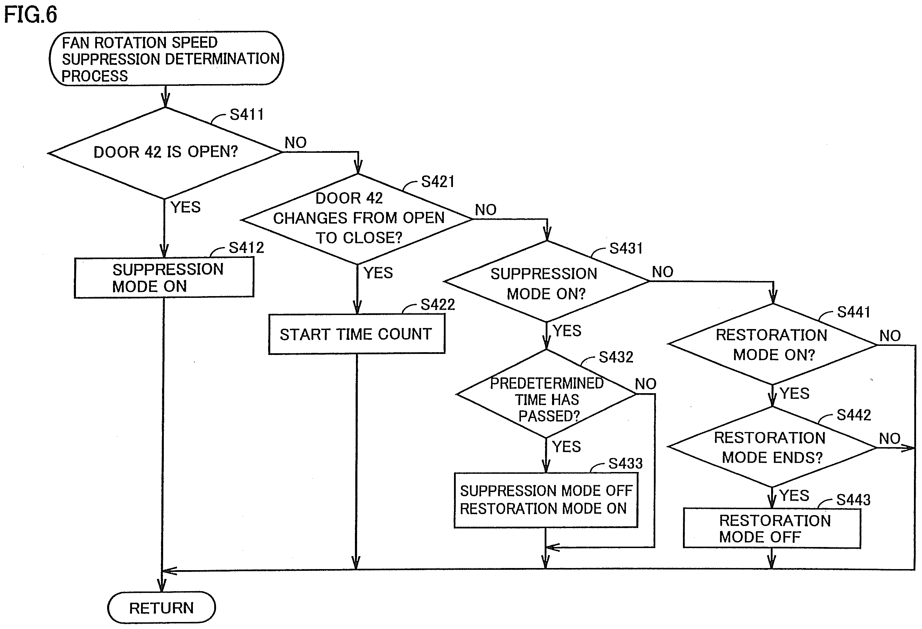

Fig. 6 is a flowchart illustrating control performed in the fan rotation speed suppression determination process (S40) in Fig. 5.

Referring to Fig. 6, in S411, first, control device 3 determines whether door 42 is open. If the determination is affirmative in this process (YES in S411), the process proceeds to S412. In S412, control device 3 sets a suppression mode ON. The suppression mode refers to a flag indicating whether to suppress the rotation speed of cooling fan 2. On the other hand, if the determination is negative in S411 (NO in S411), the process proceeds to S421.

In S421, control device 3 determines whether the state in which door 42 is open changes to the state in which it is closed. If the determination is affirmative in this process (YES in S421), the process proceeds to S422. In S422, control device 3 starts counting the time. On the other hand, if the determination is negative in S421 (NO in S421), the process proceeds to S431.

In S431, control device 3 determines whether the suppression mode is ON. If the determination is affirmative in this process (YES in S431), the process proceeds to S432. In S432, control device 3 determines whether the time count exceeds a predetermined value. That is, control device 3 determines whether a predetermined time has passed since door 42 is closed. Here, the predetermined time refers to an estimated time during which presumably much of dust entering vehicle interior 41 while door 42 is open drops onto the floor and seats in vehicle interior 41 after door 42 is closed. If the determination is affirmative in this process (YES in S432), the process proceeds to S433. In S433, control device 3 sets the suppression mode OFF and sets a restoration mode ON. The restoration mode refers to a flag indicating whether to restore the rotation speed of cooling fan 2. That is, control device 3 starts restoring the rotation speed of cooling fan 2. On the other hand, if the determination is negative in S431 (NO in S431), the process proceeds to S441.

In S441, control device 3 determines whether the restoration mode is ON. If the determination is affirmative in this process (YES in S441), the process proceeds to S442. In S442, control device 3 determines whether to terminate the restoration mode. If the determination is affirmative in this process (YES in S442), the process proceeds to S443. In S443, control device 3 sets the restoration mode OFF. The condition for determining to terminate the restoration mode is, for example, that the actual rotation speed of cooling fan 2 agrees with the target rotation speed calculated in S20 (Fig. 5).

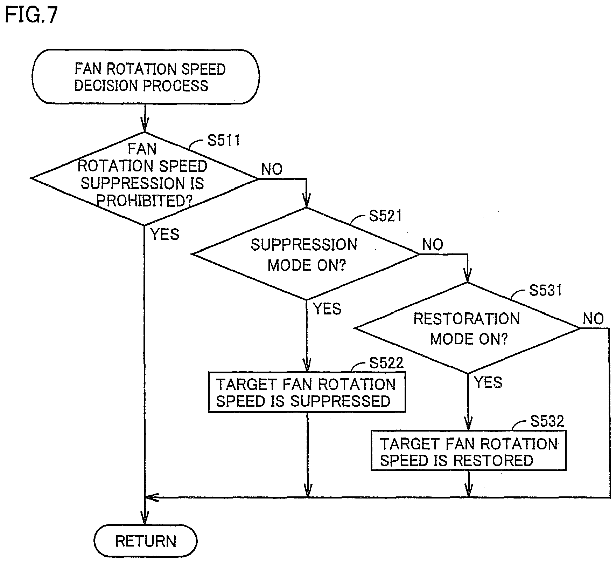

Fig. 7 is a flowchart illustrating control performed in the fan rotation speed decision process (S50) in Fig. 5.

Referring to Fig. 7, in S511, first, control device 3 determines whether to prohibit suppression of rotation speed of cooling fan 2. Specifically, control device 3 prohibits suppression of rotation speed of cooling fan 2 when door switch 43 is abnormal or when the signal from door switch 43 is abnormal. Control device 3 prohibits suppression of rotation speed of cooling fan 2 also when notified by battery state monitor 11 that battery 1 is abnormal. Control device 3 may prohibit suppression of rotation speed of cooling fan 2 when vehicle 100 is running and the signal received from door switch 43 indicates that door 42 is open. If the determination is negative in S511 (NO in S511), the process proceeds to S521.

In S521, control device 3 determines whether the suppression mode is ON. If the determination is affirmative in this process (YES in S521), the process proceeds to S522. In S522, control device 3 suppresses the target rotation speed of cooling fan 2. Specifically, control device 3 reduces the target rotation speed to a predetermined rotation speed if the suppression mode is ON. Here, control device 3 may stop rotation of cooling fan 2. The air volume to battery 1 thereby can be suppressed. On the other hand, if the determination is negative in S521 (NO in S521), the process proceeds to S531.

In S531, control device 3 determines whether the restoration mode is ON. If the determination is affirmative in this process (YES in S531), the process proceeds to S532. In S532, control device 3 restores the target rotation speed of cooling fan 2. Specifically, control device 3 increases the target rotation speed to the required rotation speed if the restoration mode is ON. The air volume to battery 1 thereby can be restored. Here, the rate of increasing the target rotation speed is set lower than the rate of reducing the target rotation speed.

If the suppression mode is OFF and the restoration mode is OFF, control device 3 sets the calculation result in S20 (Fig. 5) as the target rotation speed. That is, control device 3 controls the air volume to battery 1 based on the temperature detected in S10 (Fig. 5), when suppression of the air volume to battery 1 is stopped. In other words, control device 3 controls the air volume of cooling fan 2 based on the temperature of battery 1, in a state in which door 42 is closed. Control device 3 then proceeds to the control based on the open/closed state of door 42 when door 42 is opened.

As described above, in the first embodiment, control device 3 controls cooling fan 2 such that the air volume to battery 1 is suppressed more when at least one of doors 42 of vehicle 100 is open than when all of the doors of vehicle 100 are closed. Accordingly, when dust enters vehicle interior 41 from the outside due to opening of door 42, the air volume supplied from vehicle interior 41 to battery 1 is suppressed. The first embodiment therefore can suppress feeding of the cooling air including dust to battery 1 in the cooling device for cooling battery 1 with the air sucked from vehicle interior 41.

In the first embodiment, control device 3 restores the air volume to battery 1 after the at least one of doors 42 is closed. The rate of restoring the air volume to battery 1 is lower than the rate of suppressing the air volume to battery 1. That is, control device 3 increases the air volume gently when the air volume to battery 1 is restored. Accordingly, noise and vibration produced when the rotation speed of cooling fan 2 is rapidly increased can be suppressed. The first embodiment therefore can suppress feeding of the cooling air including dust to battery 1 while suppressing noise and vibration.

In the first embodiment, control device 3 starts the operation of restoring the air volume to battery 1 after a predetermined time has passed since the at least one of doors 42 is closed. Accordingly, much of dust entering vehicle interior 41 while door 42 is open drops onto the floor and seats in vehicle interior 41 until a predetermined time has passed since door 42 is closed. The first embodiment therefore can further suppress feeding of the cooling air including dust to battery 1, because the operation of restoring the air volume to battery 1 is started after the amount of dust floating in the air in vehicle interior 41 decreases.

In the first embodiment, cooling fan 2 includes intake ports 21a, 21b for introducing the air in vehicle interior 41. Control device 3 controls cooling fan 2 such that the air volume to battery 1 is suppressed more when the door closest to intake ports 21a, 21b is open than when all of the doors are closed. Control device 3 thus can grasp the state in which dust enters the vicinity of intake ports 21a, 21b from the outside, more correctly. The first embodiment therefore can further suppress feeding of the cooling air including dust to battery 1.

In the first embodiment, vehicle 100 includes door switch 43 for detecting whether at least one of doors 42 is open. Control device 3 prohibits suppression of the air volume to battery 1 when door switch 43 is abnormal or when the signal received from door switch 43 is abnormal. Accordingly, when accurate information is not obtained from door switch 43, the air volume to battery 1 may not be performed. The first embodiment thus can prevent unnecessary disturbance in operation of cooling fan 2.

In the first embodiment, vehicle 100 includes door switch 43 for detecting whether at least one of doors 42 is open. Control device 3 prohibits suppression of the air volume to battery 1 when vehicle 100 is running and the signal received from door switch 43 indicates that door 42 is open. Accordingly, abnormality of door switch 43 can be determined more correctly. The first embodiment thus can prevent unnecessary disturbance in operation of cooling fan 2 more correctly.

In the first embodiment, vehicle 100 includes battery state monitor 11 for monitoring the state of battery 1. Control device 3 prohibits suppression of the air volume to battery 1 based on the signal from battery state monitor 11. Accordingly, control device 3 can allow cooling fan 2 to operate correctly based on the state of battery 1.

In the first embodiment, control device 3 prohibits suppression of the air volume to battery 1 when battery state monitor 11 determines that the battery is abnormal. Accordingly, control device 3 can give priority to protection of battery 1, irrespective of the state of door 42, when battery 1 is abnormal.

In the first embodiment, vehicle 100 has a battery temperature sensor for detecting the temperature of battery 1. Control device 3 controls the air volume to battery 1, based on the temperature detected by the battery temperature sensor, when suppression of the air volume to battery 1 is stopped. Accordingly, control device 3 can suppress the air volume to battery 1 while giving priority to control of the air volume by the temperature of battery 1.

### [Modification]

The present invention is applicable also when control of calculating the target rotation speed of cooling fan 2 based on the running speed of vehicle 100 is performed.

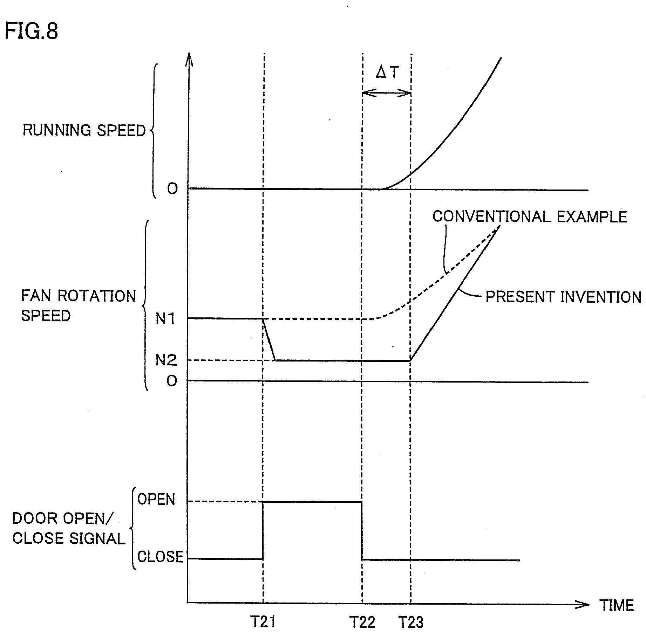

Fig. 8 is a time chart showing the rotation speed of cooling fan 2 when door 42 of vehicle 100 is opened and closed according to a modification to the first embodiment. In Fig. 8, the horizontal axis shows the time, and the vertical axis shows the running speed, the fan rotation speed, and the door open/close signal. The fan rotation speed in the modification to the first embodiment is shown by a solid line, and the fan rotation speed in a conventional example is shown by a broken line.

Referring to Fig. 8, at time T21, when the closed door 42 is opened in a state in which vehicle 100 is stopped, door switch 43 outputs to control device 3 a signal indicating that door 42 is open. Control device 3 reduces the rotation speed of cooling fan 2 from N1 to N2 based on the signal from door switch 43.

At time T22, when door 42 is closed, door switch 43 outputs to control device 3 a signal indicating that door 42 is closed. Control device 3 starts counting the time with the rotation speed of cooling fan 2 kept reduced. Vehicle 100 thereafter starts, and the running speed increases. Control device 3, however, keeps the rotation speed of cooling fan 2 reduced. By contrast, in the conventional example, the rotation speed of cooling fan 2 increases as the running speed of vehicle 100 increases.

At time T23 when the predetermined time ΔT has passed since T22, control device 3 starts restoring the rotation speed of cooling fan 2. Here, the predetermined time ΔT refers to an estimated time during which presumably much of dust entering vehicle interior 41 while door 42 is open drops onto the floor and seats in vehicle interior 41 after door 42 is closed. The rotation speed of cooling fan 2 thereafter agrees with the target rotation speed based on the running speed of vehicle 100.

As described above, the modification to the first embodiment can also suppress feeding of the cooling air including dust to battery 1, in the cooling device for cooling battery 1 with the air sucked from vehicle interior 41 in the same manner as in the first embodiment.

### [Second Embodiment]

In the second embodiment, a plurality of cooling fans 2 are provided.

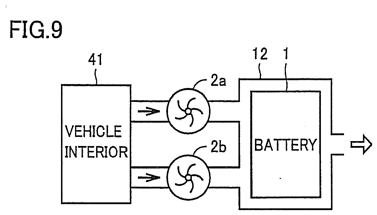

Fig. 9 is a configuration diagram of cooling fans of the battery cooling device according to a second embodiment of the present invention. Referring to Fig. 9, this cooling device includes cooling fans 2a, 2b. Cooling fans 2a, 2b are provided in parallel between vehicle interior 41 and battery pack 12. Cooling fans 2a, 2b may be provided on the way of the air flow path from battery pack 12 to the exhaust port. The exhaust port is provided so as to exhaust the cooling air to the outside of battery pack 12. Cooling fans 2a, 2b may be provided inside battery pack 12.

When the rotation speed of one of cooling fans 2a, 2b is suppressed, control device 3 also suppresses the rotation speed of the other cooling fan.

Three or more cooling fans may be provided. In this case, when the rotation speed of one of the cooling fans is suppressed, control device 3 suppresses the rotation speed of all of the cooling fans.

As described above, in the second embodiment, in a case where a plurality of cooling fans are provided, the rotation speed of all of the cooling fans is suppressed. Accordingly, the air volume of the cooling air supplied to battery 1 can be made uniform. The second embodiment thus can suppress a local difference in temperature of battery 1.

Although the foregoing embodiments have been described using an electric vehicle provided with motor generator 52, the present invention is applicable to not only electric vehicles but also hybrid vehicles additionally provided with engines and fuel cell electric vehicles additionally provided with fuel cells.

Although the foregoing embodiments have been described using battery 1, battery 1 may be replaced by a capacitor.

In the foregoing embodiment, control device 3 determines whether door 42 located closest to intake ports 21a, 21b of all of the doors of vehicle 100 is open. The present invention, however, is not limited thereto. For example, in a case where intake ports 21a, 21b are provided close to rear seat 44, control device 3 may determine whether the rear door is open. In a case where intake ports 21a, 21b are provided close to the front seat, control device 3 may determine whether the front door is open. In these cases, the same effects as in the foregoing embodiment can be achieved.

In the foregoing description, battery 1 corresponds to an embodiment of the "power storage device" in this invention, and cooling fan 2 corresponds to an embodiment of the "air blower" in this invention. Battery state monitor 11 corresponds to an embodiment of the "state monitor" in this invention, and the battery temperature sensor corresponds to an embodiment of the "temperature detector" in this invention. Door 42 corresponds to an embodiment of the "one of the doors" in this invention, and door switch 43 corresponds to an embodiment of the "door detector" in this invention.

The embodiment disclosed here should be understood as being illustrative rather than being limitative in all respects. The scope of the present invention is shown not in the foregoing description but in the claims, and it is intended that all modifications that come within the meaning and range of equivalence to the claims are embraced here.

### REFERENCE SIGNS LIST

1 battery, 2, 2a, 2b cooling fan, 11 battery state monitor, 12 battery pack, 21a, 21b intake port, 3 control device, 31 battery temperature detection unit, 32 target fan rotation speed calculation unit, 33 door open/close determination unit, 34 fan rotation speed suppression determination unit, 35 fan rotation speed decision unit, 36 fan motor control unit, 41 vehicle interior, 42 door, 43 door switch, 44 rear seat, 51 inverter, 52 motor generator, 53 wheels, 100 vehicle.

## Claims

1. A cooling device for a power storage device (1) mounted on a vehicle (100), comprising:
an air blower (2) for sucking air in a vehicle interior (41) of said vehicle and blowing cooling air to said power storage device (1);
**characterized by** comprising a control device (3) for controlling said air blower (2) such that air volume to said power storage device (1) is suppressed more when at least one door (42) of said vehicle (100) is open than when all doors of said vehicle (100) are closed; and
a door detector (43) for detecting whether said at least one door (42) is open, wherein
said control device (3) starts an operation of restoring air volume to said power storage device (1) after a predetermined time has passed since said at least one door (42) is closed, and prohibits suppression of said air volume by said air blower (2) when said vehicle (100) is running and a signal received from said door detector (43) indicates that said at least one door (42) is open , and wherein
a rate of restoring air volume to said power storage device (1) is lower than a rate of suppressing air volume to said power storage device (1).

2. The cooling device for a power storage device (1) according to claim 1, wherein
said air blower (2) includes an intake port (21a, 21b) for introducing air in said vehicle interior (41), and
said control device (3) controls said air blower (2) such that air volume to said power storage device (1) is suppressed more when a door (42) located closest to said intake port (21a, 21b) is open than when said all doors (42) are closed.

3. The cooling device for a power storage device (1) according to claim 1, wherein
said vehicle (100) includes a door detector (43) for detecting whether said at least one door (42) is open, and
said control device (3) prohibits suppression of said air volume by said air blower (2) when said door detector (43) is abnormal or when a signal received from said door detector (43) is abnormal.

4. The cooling device for a power storage device (1) according to claim 1, wherein
said vehicle (100) includes a state monitor (11) for monitoring a state of said power storage device (1), and
said control device (3) prohibits suppression of said air volume by said air blower (2), based on a signal from said state monitor (11).

5. The cooling device for a power storage device (1) according to claim 4, wherein said control device (3) prohibits suppression of said air volume by said air blower (2) when said state monitor (11) determines that said power storage device (1) is abnormal.

6. The cooling device for a power storage device (1) according to claim 1, wherein
said vehicle (100) includes a temperature detector (31) for detecting a temperature of said power storage device (1), and
said control device (3) controls said air volume by said air blower (2), based on the temperature detected by said temperature detector (31), when suppression of air volume to said power storage device (1) is stopped.

7. The cooling device for a power storage device (1) according to claim 1, wherein
said air blower (2) includes a plurality of fans (2a, 2b), and
said control device (3) suppresses blowing from all of said plurality of fans (2a, 2b) when blowing from any one of said plurality of fans (2a, 2b) is suppressed.

8. A cooling control method for a power storage device (1) mounted on a vehicle (100), comprising the steps of:
operating an air blower (2) for sucking air in a vehicle interior (41) of said vehicle (100) and blowing cooling air to said power storage device (1);
**characterized by**
controlling said air blower (2) such that air volume to said power storage device (1) is suppressed more when at least one door (42) of said vehicle (100) is open than when all doors (42) of said vehicle (100) are closed;
detecting whether said at least one door (42) is open;
determining whether a predetermined time has passed since said one door (42) is closed;
starting an operation of restoring air volume to said power storage device (1) when said predetermined time has passed since said at least one door (42) is closed, wherein a rate of restoring air volume to said power storage device (1) is lower than a rate of suppressing air volume to said power storage device (1); and
prohibiting suppression of said air volume by said air blower (2) when said vehicle (100) is running and a signal received from said door detector (43) indicates that said at least one door (42) is open.

9. The cooling control method for a power storage device (1) according to claim 8, wherein
said air blower (2) includes an intake port (21a, 21b) for introducing air in said vehicle interior (41), and
said step of controlling includes controlling said air blower (2) such that air volume to said power storage device (1) is suppressed more when a door (42) located closest to said intake port (21a, 21b) is open than when said all doors (42) are closed.

10. The cooling control method for a power storage device (1) according to claim 8, wherein
said air blower (2) includes a plurality of fans (2a, 2b), and
said step of controlling includes suppressing blowing from all of said plurality of fans (2a, 2b) when blowing from any one of said plurality of fans (2a, 2b) is suppressed.

## Patentansprüche

1. Kühlvorrichtung für eine Energiespeichervorrichtung (1), die an einem Fahrzeug (100) angebracht ist, umfassend:
ein Luftgebläse (2) zum Ansaugen von Luft in einem Fahrzeuginnenraum (41) des Fahrzeugs und zum Blasen von Kühlluft zu der Energiespeichervorrichtung (1),
**dadurch gekennzeichnet, dass** sie umfasst:
eine Steuervorrichtung (3) zum Steuern des Luftgebläses (2) derart, dass die Luftmenge zu der Energiespeichervorrichtung (1), wenn mindestens eine Tür (42) des Fahrzeugs (100) offen ist, mehr unterdrückt wird, als wenn alle Türen des Fahrzeugs (100) geschlossen sind, und
einen Türdetektor (43) zum Detektieren, ob die mindestens eine Tür (42) offen ist, wobei
die Steuervorrichtung (3) einen Betrieb des Wiederherstellens der Luftmenge zu der Energiespeichervorrichtung (1) startet, nachdem, seit die mindestens eine Tür (42) geschlossen ist, ein vorgegebener Zeitraum verstrichen ist, und das Unterdrücken der Luftmenge durch das Luftgebläse (2) verhindert, wenn das Fahrzeug (100) läuft und ein Signal, das von dem Türdetektor (43) empfangen wird, angibt, dass die mindestens eine Tür (42) offen ist, und wobei
eine Rate des Wiederherstellens der Luftmenge zu der Energiespeichervorrichtung (1) niedriger als eine Rate des Unterdrückens der Luftmenge zu der Energiespeichervorrichtung (1) ist.

2. Kühlvorrichtung für eine Energiespeichervorrichtung (1) nach Anspruch 1, wobei
das Luftgebläse (2) eine Einlassöffnung (21a, 21b) zum Einführen von Luft in den Fahrzeuginnenraum (41) umfasst und
die Steuervorrichtung (3) das Luftgebläse (2) derart steuert, dass die Luftmenge zu der Energiespeichervorrichtung (1) mehr unterdrückt wird, wenn eine Tür (42), die der Einlassöffnung (21a, 21b) am nächsten angeordnet ist, offen ist, als wenn alle Türen (42) geschlossen sind.

3. Kühlvorrichtung für eine Energiespeichervorrichtung (1) nach Anspruch 1, wobei
das Fahrzeug (100) einen Türdetektor (43) zum Detektieren, ob die mindestens eine Tür (42) offen ist, umfasst und
die Steuervorrichtung (3) das Unterdrücken der Luftmenge durch das Luftgebläse (2) verhindert, wenn der Türdetektor (43) abnormal ist oder wenn ein Signal, das von dem Türdetektor (43) empfangen wird, abnormal ist.

4. Kühlvorrichtung für eine Energiespeichervorrichtung (1) nach Anspruch 1, wobei
das Fahrzeug (100) eine Zustandsüberwachungsvorrichtung (11) zum Überwachen eines Zustands der Energiespeichervorrichtung (1) umfasst und
die Steuervorrichtung (3) das Unterdrücken der Luftmenge durch das Luftgebläse (2) basierend auf einem Signal von der Zustandsüberwachungsvorrichtung (11) verhindert.

5. Kühlvorrichtung für eine Energiespeichervorrichtung (1) nach Anspruch 4, wobei die Steuervorrichtung (3) das Unterdrücken der Luftmenge durch das Luftgebläse (2) verhindert, wenn die Zustandsüberwachungsvorrichtung (11) bestimmt, dass die Energiespeichervorrichtung (1) abnormal ist.

6. Kühlvorrichtung für eine Energiespeichervorrichtung (1) nach Anspruch 1, wobei
das Fahrzeug (100) einen Temperaturdetektor (31) zum Detektieren einer Temperatur der Energiespeichervorrichtung (1) umfasst und
die Steuervorrichtung (3) die Luftmenge durch das Luftgebläse (2) basierend auf der Temperatur, die durch den Temperaturdetektor (31) detektiert wird, steuert, wenn die Unterdrückung der Luftmenge zu der Energiespeichervorrichtung (1) gestoppt wurde.

7. Kühlvorrichtung für eine Energiespeichervorrichtung (1) nach Anspruch 1, wobei
das Luftgebläse (2) mehrere Ventilatoren (2a, 2b) umfasst und
die Steuervorrichtung (3) Blasen von jedem der mehreren Ventilatoren (2a, 2b) unterdrückt, wenn Blasen von einem beliebigen der mehreren Ventilatoren (2a, 2b) unterdrückt wird.

8. Kühlungssteuerverfahren für eine Energiespeichervorrichtung (1), die an einem Fahrzeug (100) angebracht ist, umfassend folgende Schritte:
Betreiben eines Luftgebläses (2) zum Ansaugen von Luft in einem Fahrzeuginnenraum (41) des Fahrzeugs (100) und Blasen von Kühlluft zu der Energiespeichervorrichtung (1),
**gekennzeichnet durch**
Steuern des Luftgebläses (2) derart, dass, wenn mindestens eine Tür (42) des Fahrzeugs (100) offen ist, die Luftmenge zu der Energiespeichervorrichtung (1) mehr unterdrückt wird, als wenn alle Türen (42) des Fahrzeugs (100) geschlossen sind,
Detektieren, ob die mindestens eine Tür (42) offen ist,
Bestimmen, ob, seit die eine Tür (42) geschlossen ist, ein vorgegebener Zeitraum verstrichen ist,
Starten eines Betriebs des Wiederherstellens der Luftmenge zu der Energiespeichervorrichtung (1), wenn, seit die mindestens eine Tür (42) geschlossen ist, der vorgegebene Zeitraum verstrichen ist, wobei eine Rate des Wiederherstellens der Luftmenge zu der Energiespeichervorrichtung (1) niedriger als eine Rate des Unterdrückens der Luftmenge zu der Energiespeichervorrichtung (1) ist, und
Verhindern des Unterdrückens der Luftmenge durch das Luftgebläse (2), wenn das Fahrzeug (100) läuft und ein Signal, das von dem Türdetektor (43) empfangen wird, angibt, dass die mindestens eine Tür (42) offen ist.

9. Kühlungssteuerverfahren für eine Energiespeichervorrichtung (1) nach Anspruch 8, wobei
das Luftgebläse (2) eine Einlassöffnung (21a, 21b) zum Einführen von Luft in den Fahrzeuginnenraum (41) umfasst und
der Schritt des Steuerns das Steuern des Luftgebläses (2) derart, dass die Luftmenge zu der Energiespeichervorrichtung (1) mehr unterdrückt wird, wenn eine Tür (42), die der Einlassöffnung (21a, 21b) am nächsten angeordnet ist, offen ist, als wenn alle Türen (42) geschlossen sind, umfasst.

10. Kühlungssteuerverfahren für eine Energiespeichervorrichtung (1) nach Anspruch 8, wobei
das Luftgebläse (2) mehrere Ventilatoren (2a, 2b) umfasst und
der Schritt des Steuerns das Unterdrücken des Blasens von jedem der mehreren Ventilatoren (2a, 2b) umfasst, wenn das Blasen von einem beliebigen der mehreren Ventilatoren (2a, 2b) unterdrückt wird.

## Revendications

1. Dispositif de refroidissement pour un dispositif de stockage d'énergie (1) monté sur un véhicule (100), comportant :
un ventilateur (2) destiné à aspirer de l'air dans un intérieur de véhicule (41) dudit véhicule et souffler de l'air de refroidissement vers ledit dispositif de stockage d'énergie (1) ;
**caractérisé en ce qu'**il comporte
un dispositif de commande (3) destiné à commander ledit ventilateur (2) de telle sorte qu'un volume d'air vers ledit dispositif de stockage d'énergie (1) est davantage supprimé quand au moins une porte (42) dudit véhicule (100) est ouverte que quand toutes les portes dudit véhicule (100) sont fermées ; et
un détecteur de porte (43) destiné à détecter si ladite au moins une porte (42) est ouverte, dans lequel
ledit dispositif de commande (3) démarre une opération de rétablissement du volume d'air vers ledit dispositif de stockage d'énergie (1) une fois qu'un temps prédéterminé s'est écoulé depuis que ladite au moins une porte (42) est fermée, et interdit une suppression dudit volume d'air par ledit ventilateur (2) quand ledit véhicule (100) roule et un signal reçu dudit détecteur de porte (43) indique que ladite au moins une porte (42) est ouverte, et dans lequel
un taux de rétablissement de volume d'air vers ledit dispositif de stockage d'énergie (1) est inférieur à un taux de suppression de volume d'air vers ledit dispositif de stockage d'énergie (1).

2. Dispositif de refroidissement pour un dispositif de stockage d'énergie (1) selon la revendication 1, dans lequel
ledit ventilateur (2) comprend un orifice d'admission (21a, 21b) destiné à introduire de l'air dans ledit intérieur de véhicule (41), et
ledit dispositif de commande (3) commande ledit ventilateur (2) de telle sorte qu'un volume d'air vers ledit dispositif de stockage d'énergie (1) est davantage supprimé quand une porte (42) située le plus près dudit orifice d'admission (21a, 21b) est ouverte que quand toutes lesdites portes (42) sont fermées.

3. Dispositif de refroidissement pour un dispositif de stockage d'énergie (1) selon la revendication 1, dans lequel
ledit véhicule (100) comprend un détecteur de porte (43) destiné à détecter si ladite au moins une porte (42) est ouverte, et
ledit dispositif de commande (3) interdit une suppression dudit volume d'air par ledit ventilateur (2) quand ledit détecteur de porte (43) est anormal ou quand un signal reçu dudit détecteur de porte (43) est anormal.

4. Dispositif de refroidissement pour un dispositif de stockage d'énergie (1) selon la revendication 1, dans lequel
ledit véhicule (100) comprend un dispositif de contrôle d'état (11) destiné à surveiller un état dudit dispositif de stockage d'énergie (1), et
ledit dispositif de commande (3) interdit une suppression dudit volume d'air par ledit ventilateur (2), sur la base d'un signal dudit dispositif de contrôle d'état (11).

5. Dispositif de refroidissement pour un dispositif de stockage d'énergie (1) selon la revendication 4, dans lequel ledit dispositif de commande (3) interdit une suppression dudit volume d'air par ledit ventilateur (2) quand ledit dispositif de contrôle d'état (11) détermine que ledit dispositif de stockage d'énergie (1) est anormal.

6. Dispositif de refroidissement pour un dispositif de stockage d'énergie (1) selon la revendication 1, dans lequel
ledit véhicule (100) comprend un détecteur de température (31) destiné à détecter une température dudit dispositif de stockage d'énergie (1), et
ledit dispositif de commande (3) commande ledit volume d'air grâce audit ventilateur (2), sur la base de la température détectée par ledit détecteur de température (31), quand la suppression de volume d'air vers ledit dispositif de stockage d'énergie (1) est arrêtée.

7. Dispositif de refroidissement pour un dispositif de stockage d'énergie (1) selon la revendication 1, dans lequel
ledit ventilateur (2) comprend une pluralité de ventilateurs (2a, 2b), et
ledit dispositif de commande (3) supprime la ventilation de la totalité de la ladite pluralité de ventilateurs (2a, 2b) quand la ventilation de l'un quelconque de ladite pluralité de ventilateurs (2a, 2b) est supprimée.

8. Procédé de commande de refroidissement pour un dispositif de stockage d'énergie (1) monté sur un véhicule (100), comportant les étapes de :
mise en oeuvre d'un ventilateur (2) destiné à aspirer de l'air dans un intérieur de véhicule (41) dudit véhicule et souffler de l'air de refroidissement vers ledit dispositif de stockage d'énergie (1) ;
**caractérisé par** le fait de
commander ledit ventilateur (2) de telle sorte qu'un volume d'air vers ledit dispositif de stockage d'énergie (1) est davantage supprimé quand au moins une porte (42) dudit véhicule (100) est ouverte que quand toutes les portes dudit véhicule (100) sont fermées ;
détecter si ladite au moins une porte (42) est ouverte ;
déterminer si un temps prédéterminé s'est écoulé depuis que ladite au moins une porte (42) est fermée ;
démarrer une opération de rétablissement du volume d'air vers ledit dispositif de stockage d'énergie (1) quand ledit temps prédéterminé s'est écoulé depuis que ladite au moins une porte (42) a été fermée, selon lequel un taux de rétablissement de volume d'air vers ledit dispositif de stockage d'énergie (1) est inférieur à un taux de suppression de volume d'air vers ledit dispositif de stockage d'énergie (1) ; et
interdire une suppression dudit volume d'air par ledit ventilateur (2) quand ledit véhicule (100) roule et un signal reçu dudit détecteur de porte (43) indique que ladite au moins une porte (42) est ouverte.

9. Procédé de commande de refroidissement pour un dispositif de stockage d'énergie (1) selon la revendication 8, dans lequel
ledit ventilateur (2) comprend un orifice d'admission (21a, 21b) destiné à introduire de l'air dans ledit intérieur de véhicule (41), et
ladite étape de commande comprend le fait de commander ledit ventilateur (2) de telle sorte qu'un volume d'air vers ledit dispositif de stockage d'énergie (1) est davantage supprimé quand une porte (42) située le plus près dudit orifice d'admission (21a, 21b) est ouverte que quand toutes lesdites portes (42) sont fermées.

10. Procédé de commande de refroidissement pour un dispositif de stockage d'énergie (1) selon la revendication 8, dans lequel
ledit ventilateur (2) comprend une pluralité de ventilateurs (2a, 2b), et
ladite étape de commande supprime la ventilation par la totalité de la ladite pluralité de ventilateurs (2a, 2b) quand la ventilation de l'un quelconque de ladite pluralité de ventilateurs (2a, 2b) est supprimée.
